# EUROPÄISCHE PATENTSCHRIFT

(11) **EP 3 312 131 B1**
(45) Veröffentlichungstag und Bekanntmachung des Hinweises auf die Patenterteilung: **12.07.2023**
(21) Anmeldenummer: 17193765.9
(22) Anmeldetag: 28.09.2017
(51) Int. Cl.: B66F 9/075, B66F 17/00

(54) **FLURFÖRDERZEUG MIT EINER SENSOREINRICHTUNG ZUR ÜBERWACHUNG EINES UMGEBUNGSBEREICHES**
INDUSTRIAL TRUCK WITH A SENSOR DEVICE FOR MONITORING AN AMBIENT AREA
CHARIOT DE MANUTENTION DOTÉ D'UN DISPOSITIF CAPTEUR PERMETTANT DE SURVEILLER UN ENVIRONNEMENT

(30) Priorität: 21.10.2016 DE 102016120117
(43) Veröffentlichungstag der Anmeldung: 25.04.2018
(73) Patentinhaber: Linde Material Handling GmbH, 63743 Aschaffenburg (DE)
(72) Erfinder: SCHMIDT, Alexander, 63762 Großostheim (DE); KRUMBHOLZ, Peter, 63869 Jakobsthal (DE)
(74) Vertreter: Patentship Patentanwaltgesellschaft

(56) Entgegenhaltungen:
- EP-A1- 2 339 376
- GB-A- 2 157 436
- JP-A- S5 950 379
- JP-A- S6 327 398
- JP-A- 2015 170 284
- US-A- 4 802 096

## Beschreibung

Die Erfindung betrifft ein Flurförderzeug mit einer Sensoreinrichtung zur Überwachung eines Umgebungsbereiches, wobei bei einem von der Sensoreinrichtung in dem Umgebungsbereich erfassten Hindernis ein Warnsignal erzeugt und/oder ein Eingriff in den Fahrantrieb des Flurförderzeugs durchgeführt wird, wobei die Sensoreinrichtung einen Detektionsbereich aufweist, der auf den Bereich vor einem Lastaufnahmemittel ausgerichtet ist, wenn das Flurförderzeug in Fahrtrichtung mit dem Lastaufnahmemittel voraus fährt.

Flurförderzeuge, die von einem Fahrer bedient sein können oder fahrerlos (autonom) betrieben sein können, sind mit einer als Umgebungssensor ausgebildeten Sensoreinrichtung versehen, die den im Fahrweg liegenden Umgebungsbereich und somit das Umfeld des Flurförderzeugs auf Hindernisse überwacht, um Kollisionen des Flurförderzeugs mit einem Hindernis zu vermeiden. Dies trifft insbesondere auf in Lagerbereichen betriebene Flurförderzeuge zu. Häufige Ausführungsformen derartiger Flurförderzeuge sind Schubmaststapler, Gegengewichtsgabelstapler oder Regalbediengeräte. Zur Erfassung und Überwachung des Umgebungsbereiches werden an derartigen Flurförderzeugen Sensoreinrichtungen eingesetzt, die laufzeitmessende Systeme sind, wie Ultraschall-, Radar- oder Lasersensoren, beispielsweise Laserscanner. Ebenso sind auch Bildverarbeitungssysteme bekannt, die aus einem Kamerabild oder einem Stereokamerabild die Umgebung erfassen, beispielsweise mittels einer Time-of-Flight-Kamera. Auch ist es bekannt, als Sensoreinrichtungen zur Überwachung des Umgebungsbereichs des Flurförderzeugs induktive Sensoren zu verwenden.

Mit der an dem Flurförderzeug angeordneten Sensoreinrichtung werden Hindernisse im Fahrweg des Flurförderzeugs erkannt, und im Falle eines erkannten Hindernisses in dem Fahrweg ein Warnsignal ausgegeben und/oder durch einen Eingriff in den Fahrantrieb des Flurförderzeugs das Flurförderzeug angehalten, um eine Kollision mit dem Hindernis zu vermeiden. Derartige Sensoreinrichtungen können bei fahrerlos betriebenen, sogenannten autonom fahrenden Flurförderzeugen eingesetzt werden oder auch als Assistenzsysteme bei Flurförderzeugen, die von einem Fahrer bedient werden.

Bei Schubmaststaplern, bei denen der Hubmast zwischen zwei Radarmen angeordnet ist, werden derartige Sensoreinrichtungen an den Radarmen verwendet, um das Anfahren des Schubmaststaplers mit den Radarmen an Hindernisse, beispielsweise Regalstützen eines Regals, zu vermeiden, wenn der Schubmaststapler zur Aufnahme oder zum Absetzen einer Last in Fahrtrichtung mit den Radarmen voraus gefahren wird. Die Sensoreinrichtungen sind an derartigen Schubmaststaplern an den Radarmen angeordnet und parallel zu den Gabelzinken eines als Lastgabel ausgebildeten Lastaufnahmemittels ausgerichtet, so dass die Sensoreinrichtungen seitlich an dem Lastaufnahmemittel vorbei nach vorne orientiert die Umgebung vor dem Lastaufnahmemittel bzw. vor den Radarmen erfassen.

Bekannte Sensoreinrichtungen weisen einen Detektionsbereich auf, der seitlich über die Fahrzeugaußenkontur bzw. seitlich über die Verlängerung der Fahrzeugaußenkontur in Fahrtrichtung hinausragt. Sofern sich hierbei ein Hindernis nahe und somit mit geringem seitlichem Abstand neben dem Flurförderzeug befindet und somit das Flurförderzeugs mit geringem seitlichen Abstand an einem Hindernis vorbeifährt, kommt es zu Fehldetektionen, bei denen das seitlich neben dem Flurförderzeug befindliche Hindernis erkannt wird und ein Warnsignal erzeugt wird und/oder ein Eingriff in den Fahrantrieb des Flurförderzeugs erfolgt, beispielweise das Flurförderzeug abgebremst wird. Derartige Betriebssituationen, in denen Fehldetektionen durch ein Nahe-Vorbei-Fahren an einem Hindernis auftreten, sind das Einstapeln von Lasten in ein Regal, beispielsweise mittels eines Schubmaststaplers, wobei die seitlichen Abstände zu Regalstützen des Regals sehr gering sind und die Regalstützen als Hindernisse von der Sensoreinrichtung erkannt werden. Auch können derartige Betriebssituationen, in denen Fehldetektionen durch ein Nahe-Vorbei-Fahren an einem Hindernis auftreten, eine Einfahrt eines Flurförderzeugs in ein Drive-In-Regal, wobei die seitlichen Abstände zu Regalstützen des Regals sehr gering sind und die Regalstützen als Hindernisse von der Sensoreinrichtung erkannt werden, oder eine Einfahrt eines Flurförderzeugs in ein Blocklager sein, wobei die seitlichen Abstände zu abgestellten Paletten sehr gering sind und die abgestellten Paletten als Hindernisse von der Sensoreinrichtung erkannt werden. Fehldetektionen in derartigen Betriebssituationen erfolgen bei Sensoreinrichtungen, die den Bereich vor dem Lastaufnahmemittel des Flurförderzeugs bzw. vor den Radarmen eines als Schubmaststaplers ausgebildeten Flurförderzeugs überwachen, wenn das Flurförderzeug in Fahrtrichtung mit dem Lastaufnahmemittel voraus fährt.

Sofern das Flurförderzeug von einem Fahrer bedient wird und ein Assistenzsystem vorgesehen ist, das bei einem im Detektionsbereich der Sensoreinrichtung, der den Überwachungsbereich bildet, erkannten Hindernis ein Warnsignal erzeugt und/oder einen Eingriff in den Fahrantrieb des Flurförderzeugs durchgeführt, ist es für die Akzeptanz des Assistenzsystems durch den Fahrer sehr störend, wenn in Betriebssituationen, in denen das Flurförderzeugs mit geringem seitlichen Abstand an einem Hindernis, beispielsweise an einer Regalstütze und/oder an einer abgestellten Palette, vorbeifährt, die Sensoreinrichtung ein Hindernis detektiert und ein Warnsignal erzeugt wird und/oder ein Eingriff in den Fahrantrieb des Flurförderzeugs durchgeführt wird, beispielsweise eine Reduzierung der Fahrgeschwindigkeit auf Schleichfahrt erfolgt.

Aus der DE 10 2008 008 922 A1 ist ein Schubmaststapler bekannt, der einen Überwachungssensor zur Erfassung von Hindernissen und Vermeidung von Kollisionen am vorderen Ende eines Radarms aufweist.

Aus der EP 0 800 129 B1 ist ein Flurförderzeug mit Mitteln zur Erfassung der Position und Ausrichtung eines Transportgutes sowie zur Erfassung von Hindernissen bekannt, wobei das Flurförderzeug Mittel zum Abbremsen des Flurförderzeugs im Fall der Erkennung von Hindernissen aufweist.

Die GB 2 157 436 A offenbart ein Flurförderzeug, bei dem eine von Ultraschallsensoren gebildete Sensoreinrichtung zur Hinderniserkennung und somit zur Überwachung eines Umgebungsbereiches eingesetzt wird. Wenn ein Hindernis erkannt wird, wird die Fahrgeschwindigkeit des Flurförderzeugs reduziert. Die Ultraschallsensoren sind derart am Flurförderzeug angeordnet, dass sich die Überwachungsbereiche teilweise überlappen. Die Ultraschallsensoren senden ein fahrzeug-spezifisches Schallmuster (pre-determined pattern) aus und ein Empfänger des Flurförderzeugs reagiert nur auf Echosignale mit dem fahrzeug-spezifisches Schallmuster. Damit kann vermieden werden, dass ein Flurförderzeug auf Echosignale eines anderen Flurförderzeugs reagiert.

Die JP S63 27398 A offenbart einen Gegengewichtsgabelstapler, bei dem hinten am Gegengewicht zwei Einrichtungen angeordnet sind, die gemäß der Figur 6 keulenartige Erfassungsbereiche aufweisen.

Die JP 2015 170248 A offenbart ein gattungsgemäßes Flurförderzeug mit mehreren Umgebungssensoren, die die Umgebung um das Flurförderzeug auf Hindernisse überwachen. JP 2015 170284 A offenbart den Oberbegriff des Anspruchs 1.

Der vorliegenden Erfindung liegt die Aufgabe zugrunde, ein Flurförderzeug der eingangs genannten Gattung zur Verfügung zu stellen, bei dem Fehldetektionen infolge eines Nahe-Vorbei-Fahrens des Flurförderzeugs mit geringem seitlichen Abstand an einem Hindernis und damit verbundene Warnsignale und/oder Eingriffe in den Fahrantrieb des Flurförderzeugs vermieden werden.

Diese Aufgabe wird erfindungsgemäß dadurch gelöst, dass die Sensoreinrichtung derart ausgeführt oder derart am Flurförderzeug angeordnet ist, dass sich ein Hindernis, das sich außerhalb einer Linie befindet, die mit der Fahrzeugaußenkontur des Flurförderzeugs fluchtet und die Fahrzeugaußenkontur in Fahrtrichtung des Flurförderzeugs verlängert, außerhalb des Detektionsbereichs der Sensoreinrichtung befindet, in dem ein Warnsignal erzeugt und/oder ein Eingriff in den Fahrantrieb des Flurförderzeugs durchgeführt wird. Erfindungsgemäß ist die Sensoreinrichtung derart ausgeführt oder derart am Flurförderzeug angeordnet, dass sich ein Hindernis, das außerhalb der Fahrzeugaußenkontur des Flurförderzeugs und der Verlängerung der Fahrzeugaußenkontur in Fahrtrichtung angeordnet ist, sich nicht mehr im Detektionsbereichs der Sensoreinrichtung befindet, in dem ein Warnsignal erzeugt und/oder ein Eingriff in den Fahrantrieb des Flurförderzeugs bewirkt wird. Eine derartige Ausführung bzw. Anordnung der Sensoreinrichtung ermöglicht es auf einfache Weise, dass Fehldetektionen vermieden werden, wenn ein Nahe-Vorbei-Fahren des Flurförderzeugs mit geringem seitlichen Abstand an einem Hindernis erfolgt. Mit dem erfindungsgemäßen Flurförderzeug kann somit ein Nahe-Vorbei-Fahren des Flurförderzeugs mit geringem seitlichen Abstand an einem Hindernis erfolgen, ohne dass die Sensoreinrichtung ein Hindernis erkennt und somit kein entsprechendes Warnsignal erzeugt wird und/oder kein Eingriff in den Fahrantrieb des Flurförderzeugs erfolgt.

Gemäß einer vorteilhaften Ausgestaltungsform der Erfindung ist die Sensoreinrichtung derart ausgeführt oder derart am Flurförderzeug angeordnet, dass der Detektionsbereich der Sensoreinrichtung mit einer äußeren Begrenzungskante auf oder innerhalb der Linie ist, die mit der Fahrzeugaußenkontur des Flurförderzeugs fluchtet und die Fahrzeugaußenkontur in Fahrtrichtung des Flurförderzeugs verlängert. Die äußere Begrenzungskante des Detektionsbereichs der Sensoreinrichtung ragt somit nicht über die Fahrzeugaußenkontur und deren Verlängerung in Fahrtrichtung hinaus, wodurch auf einfache Weise erzielt wird, dass beim Nahe-Vorbei-Fahren des Flurförderzeugs mit geringem seitlichen Abstand an einem Hindernis kein entsprechendes Warnsignal erzeugt wird und/oder kein Eingriff in den Fahrantrieb des Flurförderzeugs erfolgt.

Bevorzugt ist gemäß einer vorteilhaften Ausgestaltungsform der Erfindung die äußere Begrenzungskante des Detektionsbereichs in einer Linie mit der Fahrzeugaußenkontur des Flurförderzeugs angeordnet. Die äußere Begrenzungskante des Detektionsbereichs der Sensoreinrichtung befindet sich somit in einer Linie mit der Fahrzeugaußenkontur und deren Verlängerung in Fahrtrichtung hinaus.

Bevorzugt ist gemäß einer alternativen und ebenfalls vorteilhaften Ausgestaltungsform der Erfindung der Detektionsbereich parallel zu der die Fahrzeugaußenkontur in Fahrtrichtung des Flurförderzeugs verlängernden Linie ausgerichtet. Der Detektionsbereich der Sensoreinrichtung ist somit mit parallel zur Verlängerung der Fahrzeugaußenkontur in Fahrtrichtung hinaus ausgerichtet. Hierdurch kann bei einem keulenförmigen Detektionsbereich auf einfache Weise erzielt werden, dass der keulenförmige Detektionsbereich parallel zur Fahrzeugaußenkontur ausgerichtet ist und die äußere Begrenzungskante des Detektionsbereiches nicht über die Verlängerung der Fahrzeugaußenkontur hinausragt.

Gemäß einer vorteilhaften Ausgestaltungsform der Erfindung weist die Sensoreinrichtung einen einzigen Detektionsbereich auf. Bei einer Sensoreinrichtung, die einen einzigen Detektionsbereich aufweist, kann durch eine entsprechende Anordnung und somit Ausrichtung der Sensoreinrichtung am Flurförderzeug auf einfache Weise erzielt werden, dass der Detektionsbereich der Sensoreinrichtung mit der äußeren Begrenzungskante auf oder innerhalb der Linie ist, die mit der Fahrzeugaußenkontur des Flurförderzeugs fluchtet und die Fahrzeugaußenkontur in Fahrtrichtung des Flurförderzeugs verlängert.

Derartige Sensoreinrichtungen können als Ultraschallsensor oder als Radarsensor oder als induktiver Sensor oder als Laserstrahlsensor, insbesondere Ein-Strahl-Lasersensor, ausgebildet sein.

Eine entsprechende Anordnung und Ausrichtung einer derartigen Sensoreinrichtung kann auf einfache Weise erzielt werden, wenn gemäß einer vorteilhaften Ausgestaltungsform der Erfindung die Sensoreinrichtung mittels eines Adapters einstellbar am Flurförderzeug angeordnet ist. Durch entsprechende Verstellung der Sensoreinrichtung mittels des Adapters kann auf einfache und schnelle Weise die Sensoreinrichtung derart ausgerichtet werden, dass der Detektionsbereich der Sensoreinrichtung mit einer äußeren Begrenzungskante auf oder innerhalb der Linie ist, die mit der Fahrzeugaußenkontur des Flurförderzeugs fluchtet und die Fahrzeugaußenkontur in Fahrtrichtung des Flurförderzeugs verlängert.

Gemäß einer alternativen Ausführungsform der Erfindung ist ein Umlenkspiegel vorgesehen, der den Detektionsbereich der Sensoreinrichtung auf oder innerhalb der in Fahrtrichtung des Flurförderzeugs verlängerten Fahrzeugaußenkontur des Flurförderzeugs hält. Mit einem Umlenkspiegel kann insbesondere bei der Ausbildung der Sensoreinrichtung als Ein-Strahl-Lasersensor der Laserstrahl und somit die äußere Begrenzungskante des Detektionsbereichs auf oder innerhalb der Linie gehalten werden, die mit der Fahrzeugaußenkontur des Flurförderzeugs fluchtet und die Fahrzeugaußenkontur in Fahrtrichtung des Flurförderzeugs verlängert.

Gemäß einer alternativen Ausführungsform der Erfindung überwacht die Sensoreinrichtung in dem Detektionsbereich mehrere Bereiche. Bei einer Sensoreinrichtung, die mehrere Bereiche innerhalb des Detektionsbereichs überwacht und somit mehrere Bereiche innerhalb des Detektionsbereichs unterscheidet, können vorteilhafterweise nur diejenigen Bereiche ausgewertet werden, die innerhalb der Fahrzeugaußenkontur und deren Verlängerung in Fahrtrichtung liegen, um Fehldetektionen beim Nahe-Vorbei-Fahren des Flurförderzeugs mit geringem seitlichen Abstand an einem Hindernis zu verhindern.

Hierzu werden gemäß einer vorteilhaften Ausführungsform der Erfindung diejenigen Bereiche abgeschaltet, die sich außerhalb der Linie befinden, die mit der Fahrzeugaußenkontur des Flurförderzeugs fluchtet und die Fahrzeugaußenkontur in Fahrtrichtung des Flurförderzeugs verlängert. Das Abschalten kann beispielsweise softwaretechnisch erfolgen, in dem bestimmte Bereiche des Detektionsbereichs, die bei einer bestimmten Entfernung aus der Fahrzeugkontur bzw. deren Verlängerung in Fahrtrichtung hinausgehen, softwaretechnisch nur bis zu dieser Entfernung berücksichtigt werden.

Gemäß einer vorteilhaften Weiterbildung der Erfindung erfolgt die Abschaltung der Bereiche in Abhängigkeit von dem Lenkwinkel des Flurförderzeugs. Dadurch kann auf einfache Weise eine Kurvenfahrt berücksichtigt werden. Hierzu kann beispielsweise eine Trajektorie berechnet werden und die Überwachung der Bereiche außerhalb dieser Trajektorie ausgeschlossen werden.

Eine derartige Sensoreinrichtung kann als Lidar (Light detection and ranging)-Sensor oder Time-of-Flight-Kamera oder Stereokamera ausgebildet sein. Derartige Sensoreinrichtungen weisen im Überwachungsbereich viele Bildpunkte auf, so dass mehrere Bereiche innerhalb des Detektionsbereichs unterschieden werden können und somit diejenigen Bereich von der Überwachung abgeschaltet und somit ausgeschlossen werden können, die aus der Fahrzeugaußenkontur und deren Verlängerung in Fahrtrichtung herausragen.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Flurförderzeug,
- Figur 2: eine zweite Ausführungsform eines erfindungsgemäßen Flurförderzeug,
- Figur 3: zwei weitere Ausführungsformen eines erfindungsgemäßen Flurförderzeugs und
- Figur 4: eine weitere Ausführungsformen eines erfindungsgemäßen Flurförderzeugs.

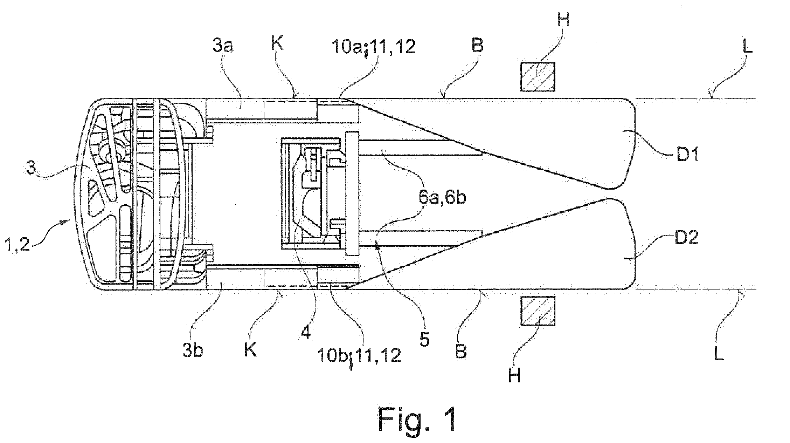

In den Figuren 1 bis 4 ist jeweils ein erfindungsgemäßes Flurförderzeug 1 in einer Draufsicht dargestellt. Das Flurförderzeug 1 ist in den dargestellten Ausführungsbeispielen als Schubmaststapler 2 ausgebildet. Gleiche Bauteile sind in den Figuren mit gleichen Bezugsziffern versehen.

Der Schubmaststapler 2 weist einen Fahrzeugkörper 3 auf, der zwei parallel zueinander angeordnete Radarme 3a, 3b aufweist, die sich in Fahrzeuglängsrichtung erstrecken. Zwischen den Radarmen 3a, 3b ist ein als Schubmast ausgebildeter Hubmast 4 in Fahrzeuglängsrichtung verschiebbar angeordnet. An dem Hubmast 4 ist ein Lastaufnahmemittel 5 anhebbar und absenkbar angeordnet, das beispielsweise als Lastgabel mit zwei Gabelzinken 6a, 6b ausgeführt ist.

An den vorderen Enden der Radarme 3a, 3b ist jeweils eine Laufrolle angeordnet, mit denen sich das Flurförderzeug 1 auf einer Fahrbahn abstützt.

An den Radarmen 3a, 3b ist jeweils eine Sensoreinrichtung 10a, 10b zur Überwachung eines Umgebungsbereiches vorgesehen. Bei einem von der Sensoreinrichtung 10a, 10b in dem Umgebungsbereich erfassten Hindernis wird ein Warnsignal erzeugt und/oder ein Eingriff in den Fahrantrieb des Flurförderzeugs 1 durchgeführt, beispielsweise das Flurförderzeug abgebremst, um eine Kollision mit dem Hindernis zu vermeiden. Die Sensoreinrichtungen 10a, 10b weisen hierzu entsprechende Detektionsbereiche D1, D2 auf, die die Überwachungsbereiche bilden, die auf Hindernisse überwacht werden. Sofern in dem Detektionsbereich D1, D2 ein Hindernis erfasst wird, wird ein Warnsignal erzeugt und/oder ein Eingriff in den Fahrantrieb des Flurförderzeugs 1 durchgeführt. Die Detektionsbereich D1, D2 sind auf den Bereich vor die Radarme 3a, 3b bzw. vor das Lastaufnahmemittel 5 ausgerichtet, wenn das Flurförderzeug 1 in Fahrtrichtung mit dem Lastaufnahmemittel 5 voraus fährt.

Erfindungsgemäß ist die Sensoreinrichtung 10a, 10b in den Figuren 1 bis 4 derart ausgeführt oder derart am Flurförderzeug 1 angeordnet, dass sich ein Hindernis H, beispielsweise eine Regalstütze eines Regals oder eine abgestellte Palette, das sich außerhalb einer Linie L befindet, die mit der Fahrzeugaußenkontur K des Flurförderzeugs 1 fluchtet und die Fahrzeugaußenkontur (Fahrzeugaußenkante) K in Fahrtrichtung des Flurförderzeugs 1 verlängert, außerhalb des Detektionsbereichs D1 bzw. D2 der Sensoreinrichtung 10a, 10b befindet, in dem ein Warnsignal erzeugt und/oder ein Eingriff in den Fahrantrieb des Flurförderzeugs durchgeführt wird.

Die Sensoreinrichtung 10a, 10b ist hierzu in den Figuren 1 bis 4 derart ausgeführt oder derart am Flurförderzeug 1 angeordnet, dass der Detektionsbereich D1, D2 der Sensoreinrichtung 10a, 10b mit einer äußeren Begrenzungskante B auf oder innerhalb der Linie L ist, die mit der Fahrzeugaußenkontur K des Flurförderzeugs 1 fluchtet und die Fahrzeugaußenkontur K in Fahrtrichtung des Flurförderzeugs 1 verlängert.

In den Figuren 1 bis 3 ist die äußere Begrenzungskante B des Detektionsbereichs D1, D2 in einer Linie mit der Fahrzeugaußenkontur K des Flurförderzeugs 1 bzw. deren Verlängerung in Fahrtrichtung angeordnet.

In den Figuren 1 bis 3 weisen die Sensoreinrichtungen 10a, 10b jeweils einen einzigen Detektionsbereich D1, D2 auf.

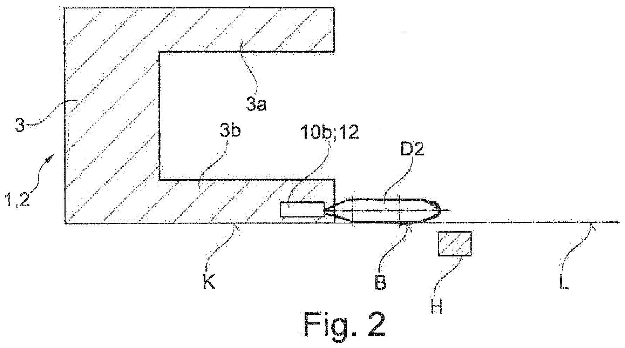

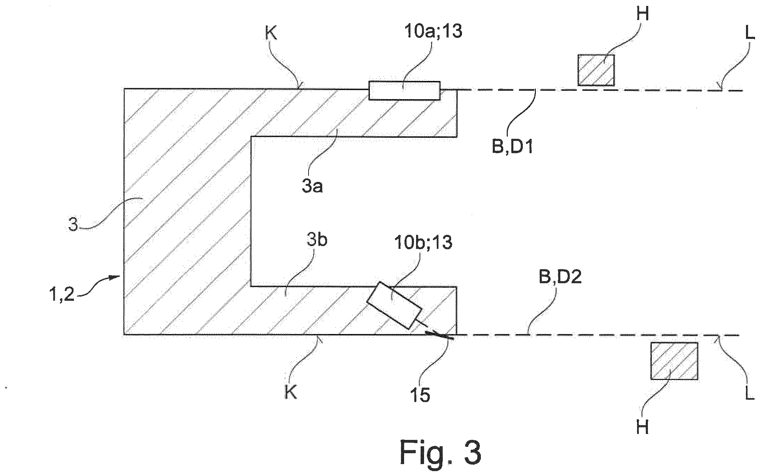

In der Figur 1 und 2 sind die Sensoreinrichtungen 10a, 10b beispielsweise als Ultraschallsensor 11 oder als Radarsensor 12 oder als induktiver Sensor ausgebildet. In der Figur 3 sind die Sensoreinrichtungen 10a, 10b als Ein-Strahl-Lasersensor 13 ausgebildet.

In der Figur 1 sind die Sensoreinrichtungen 10a, 10b beispielsweise mittels eines nicht näher dargestellten Adapters einstellbar am Flurförderzeug 1 angeordnet, um durch entsprechende Anordnung und Ausrichtung der Sensoreinrichtungen 10a, 10b die erfindungsgemäße Ausrichtung der Detektionsbereiche D1, D2 zu erzielen, gemäß der die äußere Begrenzungskante B des jeweils einzigen Detektionsbereichs D1, D2 in einer Linie mit der Fahrzeugaußenkontur K des Flurförderzeugs 1 bzw. deren Verlängerung in Fahrtrichtung ist.

In der Figur 2 ist an dem Radarm 3b eine als Ultraschallsensor 12 ausgebildete Sensoreinrichtung 10b angeordnet, bei dem der Detektionsbereich D2 in Form einer Schallkeule ausgebildet ist. In der Figur 2 ist die als Ultraschallsensor 12 ausgebildete Sensoreinrichtung 10b beispielsweise mittels eines nicht näher dargestellten Adapters einstellbar am Flurförderzeug 1 angeordnet, um durch entsprechende Anordnung und Ausrichtung des Ultraschallsensors 12 die erfindungsgemäße Ausrichtung des Detektionsbereichs D2 zu erzielen, gemäß der die Schallkeule parallel zu der Linie L ist, die die Fahrzeugaußenkontur K in Fahrtrichtung verlängert und somit die äußere Begrenzungskante B des Detektionsbereichs D1, D2 in einer Linie mit der Fahrzeugaußenkontur K des Flurförderzeugs 1 bzw. deren Verlängerung in Fahrtrichtung ist.

In der Figur 3 ist der an dem Radarm 3a angeordnete Ein-Strahl-Lasersensor 13 derart an dem Flurförderzeug 1 angeordnet, dass der die äußere Begrenzungskante B des Detektionsbereichs D1 bildende Laserstrahl entlang der Fahrzeugaußenkontur K und deren Verlängerung in Fahrtrichtung ausgerichtet ist. Der ausgesandte Laserstrahl liegt somit auf der Linie L, die mit der Fahrzeugaußenkontur K fluchtet und diese in Fahrtrichtung verlängert. Der Ein-Strahl-Lasersensor 13 ist hierzu an der Fahrzeugaußenkontur K angeordnet.

In der Figur 3 ist für den an dem Radarm 3b angeordneten Ein-Strahl-Lasersensor 13 ein Umlenkspiegel 15 vorgesehen, der den ausgesandten Laserstrahl derart umlenkt, dass der die äußere Begrenzungskante B des Detektionsbereichs D1 bildende Laserstrahl entlang der Fahrzeugaußenkontur K und deren Verlängerung in Fahrtrichtung ausgerichtet ist, so dass ausgesandte Laserstrahl auf der Linie L liegt, die mit der Fahrzeugaußenkontur K fluchtet und diese in Fahrtrichtung verlängert. Durch den Umlenkspiegel 15 kann der Ein-Strahl-Lasersensor 13 an dem Flurförderzeug 1 weiter innen und somit geschützter angeordnet werden.

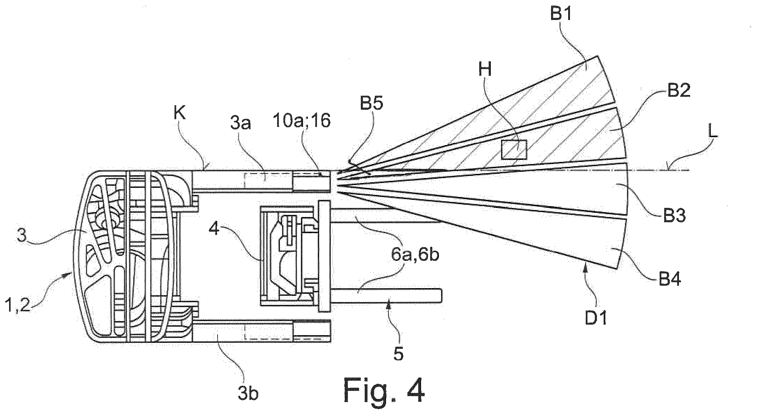

In der Figur 4 ist ein Flurförderzeug 1 dargestellt, bei dem an dem Radarm 3a eine Sensoreinrichtung 10a angeordnet, die in dem Detektionsbereich D1 mehrere Bereiche B1-B5 überwachen kann. Die Sensoreinrichtung 10a der Figur 4 ist beispielsweise als Lidar-Sensor oder Time-of-Flight-Kamera 16 oder Stereokamera ausgebildet. Derartige Sensoreinrichtungen liefern in dem Detektionsbereich D1 eine Vielzahl von Bildpunkten, so dass mehrere Bereiche B1-B5 innerhalb des Detektionsbereiches D1 unterschieden werden können. Diese Sensoreinrichtung 10a ist derart ausgeführt, dass von der Sensoreinrichtung 10a nur diejenigen Bereiche B3, B4, B5 für die Überwachung auf ein Hindernis ausgewertet werden, die sich innerhalb der Fahrzeugkontur K bzw. deren Verlängerung in Fahrtrichtung (Linie L) befinden. Die Bereiche B1, B2 des Detektionsbereichs D1, die ab einer bestimmten Entfernung aus der Fahrzeugkontur K bzw. deren Verlängerung in Fahrtrichtung hinaus ragen, werden software-technisch nur bis zu dieser Entfernung für die Überwachung berücksichtigt. Die aus der Fahrzeugaußenkontur K bzw. deren Verlängerung in Fahrtrichtung und somit über die Linie L hinausgehenden Bereiche B1, B2 können hierzu abgeschaltet und somit von der Überwachung ausgeschlossen werden. In der Figur 4 erfolgt somit nur dann ein Warnsignal und/oder ein Eingriff in den Fahrantrieb des Flurförderzeugs 1, wenn in den Bereichen B3, B4, B5, die den überwachten Detektionsbereich D1 bilden, ein Hindernis erkannt wird.

In der Figur 4 kann das Abschalten der aus der Fahrzeugaußenkontur K hinausragenden Bereiche B1, B2 auch in Abhängigkeit von dem Lenkwinkel des Flurförderzeugs 1 erfolgen, so dass eine Kurvenfahrt des Flurförderzeugs berücksichtigt werden kann.

Wie aus den Figuren 1 bis 4 ersichtlich ist, kann durch die erfindungsgemäße Anordnung der Sensoreinrichtung 10a, 10b in den Figuren 1 bis 3 bzw. die erfindungsgemäße Ausführung der Sensoreinrichtung 10a der Figur 4 erzielt werden, dass sofern das Flurförderzeug 1 an dem Hindernis H mit geringem seitlichen Abstand vorbeifährt, sich das Hindernis H nicht in dem Detektionsbereich D1 bzw. D2 der Sensoreinrichtung 10a, 10b befindet, in dem ein Warnsignal erzeugt und/oder ein Eingriff in den Fahrantrieb des Flurförderzeugs 1 durchgeführt wird. Von der Sensoreinrichtung 10a, 10b wird somit das Hindernis H nicht erkannt und es wird kein Warnsignal erzeugt und/oder kein Eingriff in den Fahrantrieb des Flurförderzeugs 1 durchgeführt. Hierdurch können Fehldetektionen beim Nahe-Vorbei-Fahren des Flurförderzeugs 1 an einem Hindernis H vermieden werden.

Bei einem Flurförderzeug 1, das von einem Fahrer bedient wird und ein Assistenzsystem vorgesehen ist, das bei einem im Detektionsbereich D1, D2 der Sensoreinrichtung 10a, 10b erkannten Hindernis ein Warnsignal erzeugt und/oder einen Eingriff in den Fahrantrieb des Flurförderzeugs 1 durchgeführt, kann mit der Erfindung, gemäß der bei einem Nahe-Vorbei-Fahren an einem Hindernis H kein Warnsignal erzeugt und/oder kein Eingriff in den Fahrantrieb des Flurförderzeugs 1 durchgeführt wird, die Akzeptanz bei dem Fahrer erhöht werden.

Die Erfindung ist nicht auf das dargestellte Ausführungsbeispiel eines Flurförderzeugs 1 als Schubmaststapler beschränkt, sondern kann auch bei anderen Ausführungsformen von Flurförderzeugen 1 eingesetzt werden, beispielsweise bei einem Gegengewichtsgabelstapler. Die Erfindung kann zudem nicht nur für eine Fahrtrichtung mit dem Lastaufnahmemittel 5 voraus eingesetzt werden, sondern auch für die entgegengesetzte oder beide Fahrtrichtungen des Flurförderzeugs 1.

Durch einen Umlenkspiegel 15 der Figur 3 kann auch ein Signal eines Ultraschallsensors 11 umgelenkt werden und ein Ultraschallsensors weiter innen und somit geschützter angeordnet werden.

## Patentansprüche

1. Flurförderzeug (1) mit einer Sensoreinrichtung (10a; 10b) zur Überwachung eines Umgebungsbereiches, wobei bei einem von der Sensoreinrichtung (10a; 10b) in dem Umgebungsbereich erfassten Hindernis (H) ein Warnsignal erzeugt und/oder ein Eingriff in den Fahrantrieb des Flurförderzeugs (1) durchgeführt wird, wobei die Sensoreinrichtung (10a; 10b) einen Detektionsbereich (D1; D2) aufweist, der auf den Bereich vor einem Lastaufnahmemittel (5) ausgerichtet ist, wenn das Flurförderzeug (1) in Fahrtrichtung mit dem Lastaufnahmemittel (5) voraus fährt, **dadurch gekennzeichnet, dass** die Sensoreinrichtung (10a; 10b) derart ausgeführt oder derart am Flurförderzeug (1) angeordnet ist, dass sich ein Hindernis (H), das sich außerhalb einer Linie (L) befindet, die mit der Fahrzeugaußenkontur (K) des Flurförderzeugs (1) fluchtet und die Fahrzeugaußenkontur (K) in Fahrtrichtung des Flurförderzeugs (1) verlängert, außerhalb des Detektionsbereichs (D1; D2) der Sensoreinrichtung (10a; 10b) befindet, in dem ein Warnsignal erzeugt und/oder ein Eingriff in den Fahrantrieb des Flurförderzeugs (1) durchgeführt wird.

2. Flurförderzeug nach Anspruch 1, **dadurch gekennzeichnet, dass** die Sensoreinrichtung (10a; 10b) derart ausgeführt oder derart am Flurförderzeug (1) angeordnet ist, dass der Detektionsbereich (D1; D2) der Sensoreinrichtung (10a; 10b) mit einer äußeren Begrenzungskante (B) auf oder innerhalb der Linie (L) ist, die mit der Fahrzeugaußenkontur (K) des Flurförderzeugs (1) fluchtet und die Fahrzeugaußenkontur (K) in Fahrtrichtung des Flurförderzeugs (1) verlängert.

3. Flurförderzeug nach Anspruch 1 oder 2, **dadurch gekennzeichnet, dass** die äußere Begrenzungskante (B) des Detektionsbereichs (D1; D2) in einer Linie (L) mit der Fahrzeugaußenkontur (K) des Flurförderzeugs (1) angeordnet ist.

4. Flurförderzeug nach Anspruch 1 oder 2, **dadurch gekennzeichnet, dass** der Detektionsbereich (D1; D2) parallel zu der die Fahrzeugaußenkontur (K) in Fahrtrichtung des Flurförderzeugs (1) verlängernden Linie (L) ausgerichtet ist.

5. Flurförderzeug nach einem der Ansprüche 1 bis 4, **dadurch gekennzeichnet, dass** die Sensoreinrichtung (10a; 10b) einen einzigen Detektionsbereich (D1; D2) aufweist.

6. Flurförderzeug nach Anspruch 5, **dadurch gekennzeichnet, dass** die Sensoreinrichtung (10a; 10b) als Ultraschallsensor (11) oder als Radarsensor (12) oder als induktiver Sensor oder als Laserstrahlsensor, insbesondere Ein-Strahl-Lasersensor (13), ausgebildet ist.

7. Flurförderzeug nach einem der Ansprüche 1 bis 6, **dadurch gekennzeichnet, dass** die Sensoreinrichtung (10a; 10b) mittels eines Adapters einstellbar am Flurförderzeug (1) angeordnet ist.

8. Flurförderzeug nach einem der Ansprüche 1 bis 7, **dadurch gekennzeichnet, dass** ein Umlenkspiegel (15) vorgesehen ist, der den Detektionsbereich (D1; D2) der Sensoreinrichtung (10a; 10b) auf oder innerhalb der in Fahrtrichtung des Flurförderzeugs (1) verlängerten Fahrzeugaußenkontur (K) des Flurförderzeugs (1) hält.

9. Flurförderzeug nach einem der Ansprüche 1 bis 4, **dadurch gekennzeichnet, dass** die Sensoreinrichtung (10a; 10b) in dem Detektionsbereich (D1) mehrere Bereiche (B1-B5) überwacht.

10. Flurförderzeug nach Anspruch 9, **dadurch gekennzeichnet, dass** diejenigen Bereiche (B1, B2) abgeschaltet werden, die sich außerhalb der Linie (L) befinden, die mit der Fahrzeugaußenkontur (K) des Flurförderzeugs (1) fluchtet und die Fahrzeugaußenkontur (K) in Fahrtrichtung des Flurförderzeugs (1) verlängert.

11. Flurförderzeug nach Anspruch 10, **dadurch gekennzeichnet, dass** die Abschaltung der Bereiche (B1, B2) in Abhängigkeit von dem Lenkwinkel des Flurförderzeugs (1) erfolgt.

12. Flurförderzeug nach einem der Ansprüche 9 bis 11, **dadurch gekennzeichnet, dass** die Sensoreinrichtung (10a; 10b) als Lidar-Sensor oder Time-of-Flight-Kamera (16) oder Stereokamera ausgebildet ist.

## Claims

1. Industrial truck (1) having a sensor device (10a; 10b) for monitoring a surrounding area, wherein a warning signal is generated and/or an intervention in the travel drive of the industrial truck (1) is carried out if an obstacle (H) is detected by the sensor device (10a; 10b) in the surrounding area, wherein the sensor device (10a; 10b) has a detection area (D1; D2) which is oriented to the area in front of a load-lifting means (5) if the industrial truck (1) moves in the direction of travel with the load-lifting means (5) in front, **characterized in that** the sensor device (10a; 10b) is designed or arranged on the industrial truck (1) in such a manner that an obstacle (H) that is outside a line (L), which is aligned with the vehicle outer contour (K) of the industrial truck (1) and extends the vehicle outer contour (K) in the direction of travel of the industrial truck (1), is outside the detection area (D1; D2) of the sensor device (10a; 10b) in which a warning signal is generated and/or an intervention in the travel drive of the industrial truck (1) is carried out.

2. Industrial truck according to Claim 1, **characterized in that** the sensor device (10a; 10b) is designed or arranged on the industrial truck (1) in such a manner that an outer boundary edge (B) of the detection area (D1; D2) of the sensor device (10a; 10b) is on or within the line (L) which is aligned with the vehicle outer contour (K) of the industrial truck (1) and extends the vehicle outer contour (K) in the direction of travel of the industrial truck (1).

3. Industrial truck according to Claim 1 or 2, **characterized in that** the outer boundary edge (B) of the detection area (D1; D2) is arranged in a line (L) with the vehicle outer contour (K) of the industrial truck (1).

4. Industrial truck according to Claim 1 or 2, . **characterized in that** the detection area (D1; D2) is oriented parallel to the line (L) which extends the vehicle outer contour (K) in the direction of travel of the industrial truck (1).

5. Industrial truck according to one of Claims 1 to 4, **characterized in that** the sensor device (10a; 10b) has a single detection area (D1; D2).

6. Industrial truck according to Claim 5, **characterized in that** the sensor device (10a; 10b) is configured as an ultrasonic sensor (11) or as a radar sensor (12) or as an inductive sensor or as a laser beam sensor, in particular a single-beam laser sensor (13) .

7. Industrial truck according to one of Claims 1 to 6, **characterized in that** the sensor device (10a; 10b) is arranged on the industrial truck (1) such that it can be adjusted by means of an adapter.

8. Industrial truck according to one of Claims 1 to 7, **characterized in that** a deflection mirror (15) is provided and keeps the detection area (D1; D2) of the sensor device (10a; 10b) on or within the vehicle outer contour (K) of the industrial truck (1) that is extended in the direction of travel of the industrial truck (1).

9. Industrial truck according to one of Claims 1 to 4, **characterized in that** the sensor device (10a; 10b) monitors a plurality of areas (B1-B5) in the detection area (D1).

10. Industrial truck according to Claim 9, **characterized in that** those areas (B1, B2) which are outside the line (L), which is aligned with the vehicle outer contour (K) of the industrial truck (1) and extends the vehicle outer contour (K) in the direction of travel of the industrial truck (1), are switched off.

11. Industrial truck according to Claim 10, **characterized in that** the areas (B1, B2) are switched off on the basis of the steering angle of the industrial truck (1).

12. Industrial truck according to one of Claims 9 to 11, **characterized in that** the sensor device (10a; 10b) is configured as a lidar sensor or a time-of-flight camera (16) or stereo camera.

## Revendications

1. Chariot de manutention (1) comprenant un dispositif capteur (10a ; 10b) destiné à surveiller une zone environnante, un signal d'alerte étant généré et/ou une intervention dans un mécanisme d'entraînement de déplacement du chariot de manutention (1) étant effectuée en présence d'un obstacle (H) détecter par le dispositif capteur (10a ; 10b) dans la zone environnante, le dispositif capteur (10a ; 10b) possédant une zone de détection (D1 ; D2) qui est orientée sur la zone devant un moyen de levage de charge (5) lorsque le chariot de manutention (1) se déplace avec le moyen de levage de charge (5) à l'avant,
**caractérisé en ce que** le dispositif capteur (10a ; 10b) est réalisé de telle sorte, ou disposé sur le chariot de manutention (1) de telle sorte, qu'un obstacle (H) qui se trouve en-dehors d'une ligne (L), laquelle affleure le contour extérieur de véhicule (K) du chariot de manutention (1) et prolonge le contour extérieur de véhicule (K) dans le sens du déplacement du chariot de manutention (1), se trouve en dehors de la zone de détection (D1 ; D2) du dispositif capteur (10a ; 10b) dans laquelle un signal d'alerte est généré et/ou une intervention dans un mécanisme d'entraînement de déplacement du chariot de manutention (1) est effectuée.

2. Chariot de manutention selon la revendication 1, **caractérisé en ce que** le dispositif capteur (10a ; 10b) est réalisé de telle sorte, ou disposé sur le chariot de manutention (1) de telle sorte, que la zone de détection (D1 ; D2) du dispositif capteur (10a ; 10b), avec un bord de délimitation externe (B), se trouve sur ou à l'intérieur d'une ligne (L) qui affleure le contour extérieur de véhicule (K) du chariot de manutention (1) et prolonge le contour extérieur de véhicule (K) dans le sens du déplacement du chariot de manutention (1).

3. Chariot de manutention selon la revendication 1 ou 2, **caractérisé en ce que** le bord de délimitation externe (B) de la zone de détection (D1 ; D2) est disposé dans une ligne (L) avec le contour extérieur de véhicule (K) du chariot de manutention (1).

4. Chariot de manutention selon la revendication 1 ou 2, **caractérisé en ce que** la zone de détection (D1 ; D2) est orientée parallèlement à la ligne (L) qui prolonge le contour extérieur de véhicule (K) dans le sens du déplacement du chariot de manutention (1).

5. Chariot de manutention selon l'une des revendications 1 à 4, **caractérisé en ce que** le dispositif capteur (10a ; 10b) possède une seule zone de détection (D1 ; D2).

6. Chariot de manutention selon la revendication 5, **caractérisé en ce que** le dispositif capteur (10a ; 10b) est réalisé sous la forme d'un capteur à ultrasons (11) ou d'un capteur radar (12) ou d'un capteur inductif ou d'un capteur à rayon laser, notamment un capteur laser à rayon unique (13).

7. Chariot de manutention selon l'une des revendications 1 à 6, **caractérisé en ce que** le dispositif capteur (10a ; 10b) est disposé de manière réglable au moyen d'un adaptateur sur le chariot de manutention (1).

8. Chariot de manutention selon l'une des revendications 1 à 7, **caractérisé en ce qu'**un réflecteur passif (15) est présent, lequel maintien la zone de détection (D1 ; D2) du dispositif capteur (10a ; 10b) sur ou à l'intérieur du contour extérieur de véhicule (K) du chariot de manutention (1) prolongé dans le sens de déplacement du chariot de manutention (1).

9. Chariot de manutention selon l'une des revendications 1 à 4, **caractérisé en ce que** le dispositif capteur (10a ; 10b) surveille plusieurs zones (B1-B5) dans la zone de détection (D1).

10. Chariot de manutention selon la revendication 9, **caractérisé en ce que** les zones (B1, B2) qui se trouvent en dehors de la ligne (L) qui affleure le contour extérieur de véhicule (K) du chariot de manutention (1) et prolonge le contour extérieur de véhicule (K) dans le sens du déplacement du chariot de manutention (1) sont désactivées.

11. Chariot de manutention selon la revendication 10, **caractérisé en ce que** la désactivation des zones (B1, B2) s'effectue en fonction de l'angle de direction du chariot de manutention (1).

12. Chariot de manutention selon l'une des revendications 9 à 11, **caractérisé en ce que** le dispositif capteur (10a ; 10b) est réalisé sous la forme d'un capteur Lidar ou d'une caméra à temps de vol (16) ou d'une caméra stéréoscopique.
